# EUROPEAN PATENT SPECIFICATION

(11) **EP 0 570 937 B1**
(45) Date of publication and mention of the grant of the patent: **04.08.1999**
(21) Application number: 93108178.0
(22) Date of filing: 19.05.1993
(51) Int. Cl.: H04B 5/04

(54) **Radio pager**
Funkpersonenrufgerät
Installation d'appel de personnes par radio

(30) Priority: 20.05.1992 JP 15293392
(43) Date of publication of application: 24.11.1993
(73) Proprietor: NEC CORPORATION, Tokyo (JP)
(72) Inventor: Matsumoto, Mariko, Tokyo (JP)
(74) Representative: VOSSIUS & PARTNER

(56) References cited:
- EP-A- 0 360 216
- US-A- 4 706 272

## Description

The present invention relates to a radio pager and, more particularly, to a radio pager capable of receiving a group call as distinguished from a personal call.

It is a common practice with a radio pager having the above capability to store a group call address number in addition to an address number particular to the pager beforehand. Specifically, a group call is such that a group of radio pagers each having a particular address number are called by a common group call address number at the same time.

The conventional group call uses a group call address number stored beforehand, as stated above. This brings about a drawback that the same number of group call address numbers as the number of groups to be called are required, reducing the number of address numbers which can be allocated to individual pagers, i.e., the number of subscribers to be registered. Moreover, to rearrange the group to be called at the same time, it is necessary to rewrite a ROM (Read Only Memory) built in each pager, resulting in a troublesome procedure.

EP-A-0 360 216 discloses a selective paging system with a paging receiver having a plurality of addresses. One of the addresses is reported as an individual call and the other as a group call.

It is an object of the present invention to provide a radio pager which does not reduce the number of subscribers to be registered and facilitates the rearrangement of the group to be called at the same time.

This object is achieved with the features of the claim.

The above and other objects, features and advantages of the present invention will become more apparent from the following detailed description taken with the accompanying drawings in which:
FIG. 1 is a block diagram schematically showing a radio pager embodying the present invention;
FIG. 2 shows a format of a signal to be sent to the radio pager shown in FIG. 1; and
FIG. 3 is a flowchart demonstrating a specific operation of the embodiment.

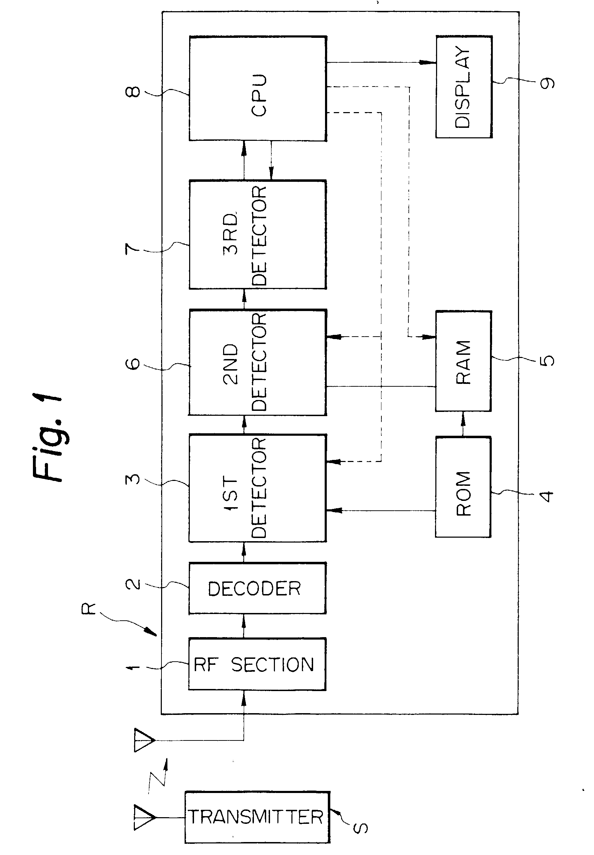

Referring to FIG. 1 of the drawings, a radio pager embodying the present invention is shown and generally labeled R. In the figure, solid lines and phantom lines indicate signal lines and control lines, respectively. As shown, the radio pager has an antenna (no numeral) through which a carrier wave modulated by a paging signal and sent from a transmitter S comes in. The paging signal from the antenna is applied to and demodulated by an RF (Radio Frequency) or radio section 1. A decoder 2 decodes the demodulated signal fed thereto from the RF section 1. A first detector 3 detects an address number out of the decoded paging signal and determines whether or not it is identical with an address number assigned to the pager R and stored in a ROM 4. When the two address numbers are identical as determined by the first detector 3, a second detector 6 detects a message meant for the pager R and headed by the address number. The reference numeral 5 designates a RAM (Random Access Memory). A third detector 7 follows the second detector 6 to determine whether or not the received call is a group call. A CPU 8 causes a display 9 to show the message meant for the pager R and detected by the second detector 6. Further, when the third detector 7 detects a group call, the CPU 8 detects a group call address number represented by the following group call address number data by comparison and then receives a group call message which follows the group call address number. Specifically, the second detector 6 checks the address number written to the RAM 5. When, the received call is a group call as determined by the third detector 7, the CPU 8 writes the group call address number in the RAM 5 and then causes the second detector 6 to receive a group call message which follows the group call address number.

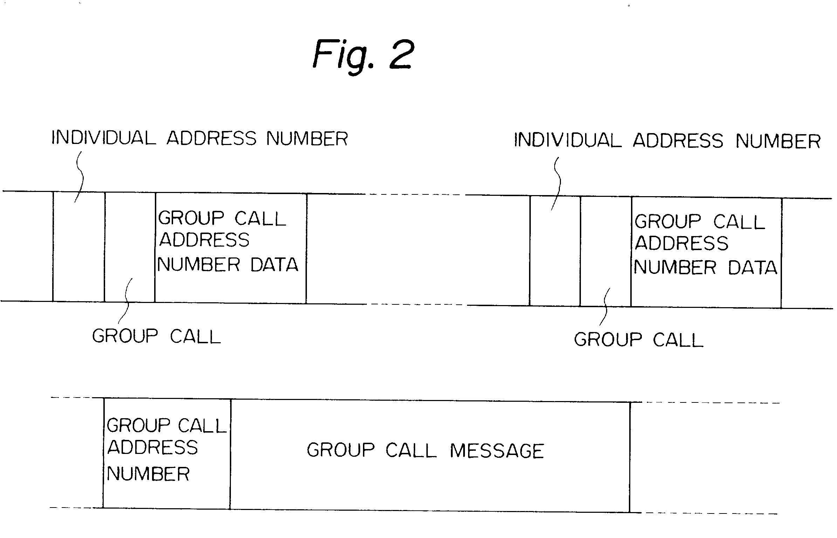

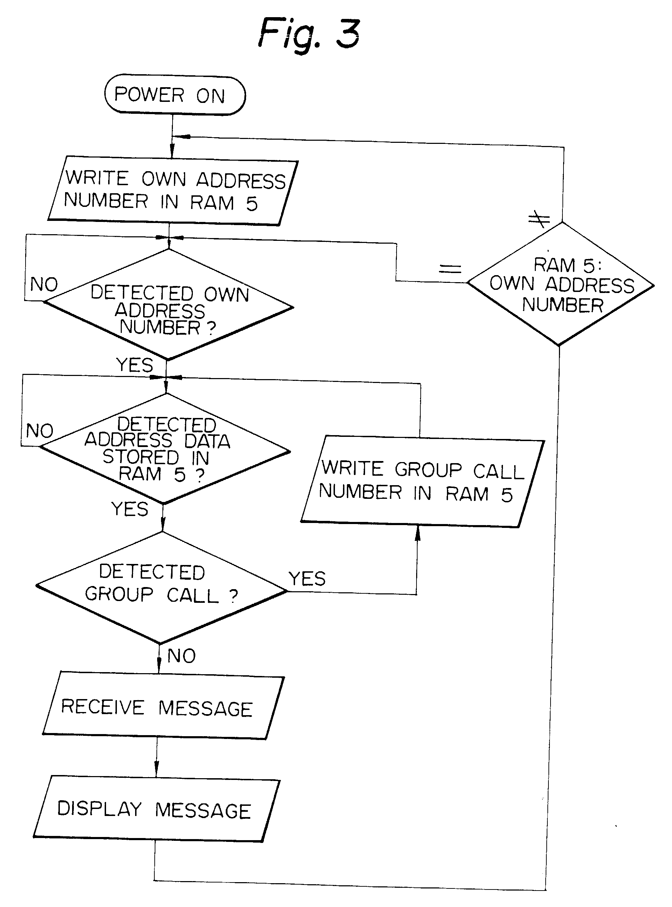

A specific operation of the radio pager shown in FIG. 1 will be described with reference to FIGS. 2 and 3. As shown in FIG. 2, regarding a group call, the transmitter S sends an address number assigned to a given radio pager belonging to a group to be called simultaneously, then an indication indicative of a group call, and then group call address number data. Subsequently,the transmitter S sends an address number particular to another radio pager belonging to the same group. Finally, the transmitting station S sends a message meant for the whole group by use of the group call address number sent beforehand as an address.

As shown in FIG. 3, as a power switch, not shown, provided on the pager R is turned on, the CPU 8 reads the address number out of the ROM 4 and writes it in the RAM 5. As a paging signal is demodulated by the RF section 1 and then decoded by the decoder 2, the first detector 3 compares the decoded signal and the address number stored in the ROM 4. If they compare equal, the second detector 6 determines whether or not the received signal and the address number written to the RAM 5 are identical. In this case, the address number of the pager R has been written to the RAM 5 as rewritable number data.

If the received signal and the address number stored in the RAM 5 are identical as determined by the second detector 6, the third detector 7 determines whether or not the received call is a group call. If the received call is a group call, the CPU 8 writes in the RAM 5 the group call address number indicated by the group address number data which follows the group call indication. Then, the CPU 8 again brings the second detector 6 into a waiting state. Subsequently, the CPU 8 receives a message and causes the display 9 to display the message. Finally, the CPU 8 writes the address number stored in the ROM 4 in the RAM 5 and then restores the first detector 3 to a waiting sate.

In summary, it will be seen that the present invention provides a radio pager which makes it needless to store a group call address number therein beforehand. Therefore, it is not necessary to use the same number of group call address numbers as the number of groups. This prevents the number of address numbers to be assigned to individual radio pagers and, therefore, the number of subscribers to be registered from being reduced. In addition, a group of radio pagers to be called at the same time can be rearranged with ease.

Various modifications will become possible for those skilled in the art after receiving the teachings of the present disclosure without departing from the scope thereof.

## Claims

1. A radio pager capable of receiving a group call, comprising:
a radio frequency section (1) for receiving and demodulating a paging signal;
a decoder (2) for decoding the paging signal demodulated by said radio frequency section (1);
a first detector (3) for determining whether or not the paging signal decoded by said decoder is identical with an address number assigned to said radio pager;
a second detector (6) for detecting, when said paging signal and said address number coincide as determined by said first detector (3), a message meant for said radio pager (R) and indicated by the address number assigned to said radio pager (R);
a third detector (7) for determining, when said second detector (6) detects the message meant for said radio pager, whether or not said message is a group call; and
a controller (8) for detecting, when the message is a group call, a group call address number indicated by group call address number data received thereafter, and receiving a group
call message following said group call address number,
characterized in that said second detector (6) compares the address number with an address number stored in a rewritable memory (5), said controller (8) writing, when said third detector (7) detects a group call, the group call address number in said rewritable memory (5) and then causing said second detector (6) to the group call message.

## Patentansprüche

1. Funkrufempfänger, der fähig zum Empfangen eines Gruppenrufes ist, mit:
einem Hochfrequenz-Abschnitt (1) zum Empfangen und Demodulieren eines Funkrufsignals;
einem Decoder (2) zum Decodieren des durch den Hochfrequenz-Abschnitt (1) demodulierten Funkrufsignals;
einem ersten Detektor (3) zum Feststellen, ob das durch den Decoder decodierte Funkrufsignal identisch mit einer dem Funkrufempfänger zugewiesenen Adreßnummer ist oder nicht;
einem zweiten Detektor (6) zum Ermitteln, wenn das Funkrufsignal und die Adreßnummer übereinstimmen, wie durch den ersten Detektor (3) festgestellt, einer Nachricht, die für den Funkrufempfänger (R) bestimmt ist und durch die dem Funkrufempfänger (R) zugewiesene Adreßnummer angezeigt wird;
einem dritten Detektor (7) zum Feststellen, wenn der zweite Detektor (6) die für den Funkrufempfänger bestimmte Nachricht ermittelt, ob die Nachricht ein Gruppenruf ist oder nicht; und
einer Steuereinrichtung (8) zum Ermitteln, wenn die Nachricht ein Gruppenruf ist, einer Gruppenruf-Adreßnummer, die durch danach empfangene Gruppenruf-Adreßnummerdaten angezeigt wird, und Empfangen einer der Gruppenruf-Adreßnummer folgenden Gruppenruf-Nachricht,
dadurch gekennzeichnet, daß der zweite Detektor (6) die Adreßnummer mit einer in einem überschreibbaren Speicher (5) gespeicherten Adreßnummer vergleicht, wobei die Steuereinrichtung (8), wenn der dritte Detektor (7) einen Gruppenruf ermittelt, die Gruppenruf-Adreßnummer in den überschreibbaren Speicher (5) schreibt und dann den zweiten Detektor (6) veranlaßt, die Gruppenruf-Nachricht zu empfangen.

## Revendications

1. Récepteur d'appel radio capable de recevoir un appel de groupe de voies, comprenant :
un étage radiofréquence (1) destiné à recevoir et à démoduler un signal d'appel ;
un décodeur (2) destiné à décoder le signal d'appel démodulé par ledit étage radiofréquence (1) ;
un premier détecteur (3) destiné à déterminer si le signal d'appel décodé par ledit décodeur est identique ou non à un numéro d'adresse attribué audit récepteur d'appel radio ;
un second détecteur (6) destiné à détecter, lorsque ledit le signal d'appel et ledit numéro d'adresse coïncident ainsi que l'a déterminé ledit premier détecteur (3), un message destiné audit récepteur d'appel radio (R) et désigné par le numéro d'adresse attribué audit récepteur d'appel radio (R) ;
un troisième détecteur (7) destiné à déterminer, lorsque ledit second détecteur (6) détecte le message destiné audit récepteur d'appel radio, si ledit message est un appel de groupe de voies ou non ; et
un contrôleur (8) destiné à détecter, lorsque le message est un appel de groupe de voies, un numéro d'adresse d'appel de groupe de voies désigné par les données de numéro d'adresse d'appel de groupe de voies reçues ensuite, et à recevoir un message d'appel de groupe de voies suivant ledit numéro d'adresse d'appel de groupe de voies,
caractérisé en ce que ledit second détecteur (6) compare le numéro d'adresse à un numéro d'adresse mémorisé dans une mémoire réinscriptible (5), ledit contrôleur (8) écrivant, lorsque ledit troisième détecteur (7) détecte un appel de groupe de voies, le numéro d'adresse d'appel de groupe de voies dans ladite mémoire réinscriptible (5), puis amenant ledit second détecteur (6) à recevoir le message d'appel de groupe de voies.
